# EUROPÄISCHE PATENTANMELDUNG

(11) **EP 4 834 602 A1**
(43) Veröffentlichungstag der Anmeldung: **04.11.2026**
(21) Anmeldenummer: 26161336.8
(22) Anmeldetag: 27.02.2026
(51) Int. Cl.: B60D 1/26, B60D 1/46, A01B 59/06

(54) **LANDWIRTSCHAFTLICHE ARBEITSMASCHINE SOWIE VERFAHREN ZU IHREM BETRIEB**

(30) Priorität: 28.04.2025 DE 102025116307
(71) Anmelder: CLAAS Tractor S.A.S., 78141 Vélizy-Villacoublay Cedex (FR)
(72) Erfinder: Benakopoulos, Stavros, 92120 MONTROUGE (FR); Villette, Clement, 58310 BOUHY (FR); Roger, Fabien, 75019 Paris (FR); Evers, Maxime, 58000 Nevers (FR); Pommier, Benjamin, 78460 Chevreuse (FR); Lottin, Manon, 72000 Le Mans (FR)
(74) Vertreter: CLAAS Gruppe

(57) **Zusammenfassung**

Die Erfindung betrifft eine landwirtschaftliche Arbeitsmaschine (1), umfassend eine Fahrzeugkabine (2), eine Eingabeeinrichtung (4) und eine Hubkupplung (5) zur Ankupplung eines Anbaugeräts (6).

Um die Erfindung dahingehend weiterzuentwickeln, dass eine landwirtschaftliche Arbeitsmaschine (1) bereitgestellt wird, die gegenüber dem Stand der Technik einen reibungsfreien und schnellen Kupplungsprozess durchführt, ist erfindungsgemäß vorgesehen, dass eine Steuereinrichtung (8), die einen Datenspeicher (9) umfasst und dazu vorgesehen und eingerichtet ist, eine Überführung der Hubkupplung (5) von der Ausgangsstellung in die Kupplungsstellung selbsttätig durchzuführen, wobei zumindest solche Arbeitsschritte, derer es zur Überführung der Hubkupplung (5) von der Ausgangsstellung in die Kupplungsstellung bedarf, einer Kupplungssequenz zugeordnet sind, die in dem Datenspeicher (9) gespeichert sind, wobei die Steuereinrichtung (8) derart mit der Eingabeeinrichtung (4) zusammenwirkt, dass die Kupplungssequenz von dem Benutzer mittels Nutzung der Eingabeeinrichtung (4) auslösbar ist.

Ferner betrifft die Erfindung ein Verfahren ein Verfahren zum Betrieb der landwirtschaftlichen Arbeitsmaschine (1) bereitzustellen.

## Beschreibung

Die vorliegende Anmeldung betrifft eine landwirtschaftliche Arbeitsmaschine, insbesondere einen Traktor, gemäß dem Oberbegriff von Anspruch 1. Weiterhin betrifft die Erfindung ein Verfahren zum Betrieb einer landwirtschaftlichen Arbeitsmaschine nach Anspruch 8.

Die landwirtschaftliche Arbeitsmaschine kann beispielsweise und vorzugsweise von einem Traktor oder einem Teleskoplader gebildet sein. Sie weist eine Fahrzeugkabine auf, die im Sinne der vorliegenden Anmeldung als ein räumlich umbauter Kabineninnenraum der Arbeitsmaschine verstanden wird, der bestimmungsgemäß dazu vorgesehen und eingerichtet ist, dass sich ein Benutzer der Arbeitsmaschine zum Zwecke des Betriebs der Arbeitsmaschine darin aufhält.

In dem Kabineninnenraum der Fahrzeugkabine ist eine Eingabeeinrichtung angeordnet, mittel der ein Benutzer der Arbeitsmaschine Eingaben zum Betrieb der Arbeitsmaschine tätigen kann. Bevorzugt ist die Eingabeeinrichtung räumlich zu einem in dem Kabineninnenraum befindlichen Fahrersitz angeordnet, sodass ein Benutzer die Eingabeeinrichtung von dem Fahrersitz aus bedienen kann.

Eine an der Arbeitsmaschine befindliche Hubkupplung, im Stand der Technik auch als "Pick-Up-Hitch" bezeichnet, dient zur Ankupplung eines Anbaugeräts. Im Sinne der vorliegenden Anmeldung sind "Anbaugeräte" sämtliche Anhänger oder Geräte, die mittels der Arbeitsmaschine bewegt beziehungsweise transportiert werden können. Das Anbaugerät weist hierzu vorzugsweise eine Zugöse oder Zug-Kugelkupplung auf, die mit der Hubkupplung verbindbar ist.

Die Hubkupplung ist derart ausgelegt, dass mittels ihr einen Kupplungsprozess durchführbar ist, im Zuge dessen das Anbaugerät an die Arbeitsmaschine ankuppelbar oder von der Arbeitsmaschine abkuppelbar ist. Zu Beginn eines Kupplungsprozesses als auch nach Beendigung des Kupplungsprozesses befindet sich die Hubkupplung in einer Ausgangsstellung. Ausgehend von dieser Ausgangsstellung ist die Hubkupplung in eine Kupplungsstellung überführbar, in welcher die Hubkupplung dazu geeignet ist, ein Kopplungsmittel des Anbaugeräts zum Zweck der Ankupplung des Anbaugeräts an die Arbeitsmaschine aufzunehmen oder zum Zweck der Abkupplung des Anbaugeräts von der Arbeitsmaschine freizugeben.

Vorteil der Hubkupplung ist, dass diese bei dem Kupplungsprozess bis auf den Boden abgesenkt werden kann, sodass ein Anheben des Kopplungsmittels des Anbaugerätes auf die Höhe des Kupplungselements an der Hubkupplung nicht erforderlich ist. Die aus dem Stand der Technik bekannten Hubkupplungen weisen eine Anbaukonsole, welche mit der Arbeitsmaschine verbunden ist, eine schwenkbar mit der Anbaukonsole verbundene Schwenkkonsole, ein an der Schwenkkonsole angeordnetes Schlittenelement und ein an dem Schlittenelement angeordnetes Kupplungselement auf. Mittels der Schwenkkonsole kann die Hubkupplung zumindest bis in Bodennähe abgesenkt werden, um mit dem Kupplungselement ungefähr auf die Höhe des Kopplungsmittels des Anbaugerätes zu kommen. Das Schlittenelement ist zumindest anteilig in Längsrichtung der Arbeitsmaschine verschiebbar in der Schwenkkonsole gelagert, sodass ein Abstand zwischen dem Kupplungselement der Hubkupplung und dem Kopplungsmittel des Anbaugerätes verringerbar ist. Mit anderen Worten kann das Schlittenelement von der Arbeitsmaschine weg in Richtung auf das Anbaugerät zugeschoben werden, um den genannten Abstand zu verringern. Wünschenswert ist, dass das Schlittenelement das Kupplungselement exakt an das Kopplungsmittel des Anbaugeräts führt, sodass eine Kopplung beider erfolgen kann.

Typischerweise ist die Hubkupplung mit einer Dreipunktaufhängung der Arbeitsmaschine hydraulisch verbunden. Die Dreipunktaufhängung ermöglicht eine Aufhängung des Anbaugerätes an der Arbeitsmaschine an drei Punkten. Hierdurch ist das Anbaugerät stabil an der Arbeitsmaschine gelagert und es können Schieflagen des Anbaugerätes vermieden werden. Ein Absenken und Anheben der Dreipunktaufhängung erfolgen mittels eines Hydrauliksystems. Dieses Hydrauliksystem der Dreipunktaufhängung kann ebenfalls dazu verwendet werden, die Hubkupplung abzusenken und/oder anzuheben, wenn die Schwenkkonsole entriegelt ist.

Eine aus dem Stand der Technik bekannte Hubkupplung ist beispielsweise in der DE 203 19 852 U1 beschrieben. Die Hubkupplung weist eine Anbaukonsole und eine schwenkbar mit der Anbaukonsole verbundene Schwenkkonsole und eine Niederhaltervorrichtung auf. Ein Kupplungselement in Form einer Kupplungskugel ist unmittelbar mit einem an der Schwenkkonsole verschiebbar gelagerten Schlittenelement verbunden oder mit diesem Schlittenelement einstückig ausgebildet. Hierdurch ist eine gute Kraftübertragung von der Kupplungskugel auf das Schlittenelement gegeben. Es kann somit eine besonders hohe zulässige Stützlast bei geringer Baugröße erzielt werden. Es ist eine annährend spielfreie Verbindung zwischen der Arbeitsmaschine und einem Anbaugerät herstellbar, wodurch die Fahrstabilität wesentlich verbessert wird.

Die in der EP 1 867 500 A1 dargestellte Hubkupplung ist derart ausgelegt, dass unterschiedlich geformte Anbaugeräte an die Arbeitsmaschine gekoppelt werden können. Hierzu sieht die Hubkupplung eine Verriegelungsvorrichtung zur Verriegelung des Schlittenelements im hochgeschwenkten Zustand der Schwenkkonsole vor, wobei das Schlittenelement in wenigstens zwei unterschiedliche Positionen mittels der Verriegelungsvorrichtung verriegelbar ist.

Bei den im Stand der Technik bekannten Hubkupplungen ist vorgesehen, dass der Benutzer die einzelnen Schritte des Kupplungsprozesses, bei dem das Anbaugerät an die Arbeitsmaschine angekuppelt wird, einzeln aktiviert. Hierbei müssen mehrere Schritte durchlaufen werden. Beispielsweise muss die Dreipunktaufhängung bis in ihre oberste Hubstellung angehoben werden. Erst bei Vorliegen der Dreipunktaufhängung in dieser obersten Hubstellung kann eine Entriegelung der Schwenkkonsole der Hubkupplung erfolgen. Anschließend erfolgt die Absenkung der Dreipunktaufhängung, wobei der Entriegelungszustand der Schwenkkonsole aufrechterhalten werden muss, sodass die Schwenkkonsole ebenfalls abgesenkt wird. Schließlich muss das Schlittenelement ausgefahren werden. Das heißt, sowohl die Verschwenkung der Schwenkkonsole als auch das Aus- und Einfahren des Schlittenelements werden von dem Benutzer einzeln aktiviert. Das Entriegeln der Schwenkkonsole erfolgt in der Regel hydraulisch oder über einen elektrischen Aktor.

Der vorliegenden Erfindung liegt die Aufgabe zugrunde, eine landwirtschaftliche Arbeitsmaschine bereitzustellen, die gegenüber dem Stand der Technik einen reibungsfreien und schnellen Kupplungsprozess erlaubt. Ferner ist es Aufgabe der vorliegenden Erfindung, zur Erreichung des genannten Ziels auch ein Verfahren zum Betrieb der landwirtschaftlichen Arbeitsmaschine bereitzustellen.

Die zugrunde liegende Aufgabe wird mittels einer Kabinenlagerung mit den Merkmalen das Anspruchs 1 gelöst. Vorteilhafte Ausgestaltungen ergeben sich aus den zugehörigen Unteransprüchen sowie der Beschreibung.

Die erfindungsgemäße Arbeitsmaschine zeichnet sich durch eine Steuereinrichtung aus, die einen Datenspeicher umfasst und dazu vorgesehen und eingerichtet ist, eine Überführung der Hubkupplung von der Ausgangsstellung in die Kupplungsstellung selbsttätig durchzuführen. Das heißt, die Steuereinrichtung ist derart ausgelegt, dass sie den Kupplungsprozess, bei dem die Hubkupplung in ihre Kupplungsstellung und/oder in ihre Ausgangsstellung überführt wird, selbsttätig bzw. automatisch durchführen kann. Hierbei sind zumindest solche Arbeitsschritte, derer es zur Überführung der Hubkupplung von der Ausgangsstellung in die Kupplungsstellung bedarf einer Kupplungssequenz zugeordnet, die in dem Datenspeicher abgespeichert sind.

Befindet sich die Hubkupplung in ihrer Kupplungsstellung kann das Kopplungsmittel des Anbaugeräts an das Kupplungselement der Hubkupplung in Eingriff gebracht oder von diesem gelöst werden. Die Hubkupplung liegt bei Vorliegen in ihrer Kupplungsstellung quasi in einem "offenen Zustand" vor. In der Ausgangsstellung der Hubkupplung ist diese "geschlossen", sodass kein Kopplungsmittel mit dem Kupplungselement der Arbeitsmaschine neu verbindbar ist oder - wenn das Kopplungselement mit einem Kopplungsmittel eines Anbaugeräts zusammenwirkt - das Kopplungsmittel nicht von dem Kopplungselement lösbar ist. In der Ausgangsstellung können das Kopplungsmittel und das Kupplungselement miteinander verbunden sein, sodass das Arbeitsgerät das Anbaugerät mitführen kann. Alternativ kann in der Ausgangsstellung auch kein Kopplungsmittel an dem Kupplungselement fixiert sein. Das Arbeitsgerät kann sodann ohne Anbaugerät bewegt werden.

Im Sinne der vorliegenden Anmeldung beschreibt der "Kupplungsprozess" den Prozess des An- oder Abkuppelns eines Anbaugeräts an die Arbeitsmaschine. Bevorzugt umfasst der Kupplungsprozess daher eine Überführung der Hubkupplung von ihrer Ausgangsstellung in ihre Kupplungsstellung und wieder zurück in ihre Ausgangsstellung.

Die einzelnen Arbeitsschritte des Kupplungsprozesses, die von der Steuereinrichtung selbsttätig durchgeführt werden, sind Teil einer "Kupplungssequenz", die in dem Datenspeicher abgespeichert ist. Die Die Kupplungssequenz umfasst zumindest solche Arbeitsschritte des Kupplungsprozesses, die zur Überführung der Hubkupplung von ihrer Ausgangsstellung in ihre Kupplungsstellung erforderlich sind. Die Kupplungssequenz ist in dem Datenspeicher gespeichert, von wo die Steuereinrichtung sie entsprechend abrufen kann. Es ist denkbar, dass auf dem Datenspeicher verschiedene Kupplungssequenzen gespeichert sind. Beispielsweise kann eine erste Kupplungssequenz alle Arbeitsschritte von der Ausgangsstellung der Hubkupplung bis zu ihrer Kupplungsstellung und eine andere Kupplungssequenz alle Arbeitsschritte von der Kupplungsstellung zurück in die Ausgangsstellung enthalten. Auch kann eine Kupplungssequenz alle Arbeitsschritte des Kupplungsprozesses beinhalten. Auf ein händisches Zutun des Benutzers könnte sodann gänzlich verzichtet werden. Es wäre jedoch auch denkbar, dass eine weitere Kupplungssequenz zumindest zwei Arbeitsschritte des Kupplungsprozesses enthält, sodass die Steuereinrichtung entsprechend nur diese einzelnen Arbeitsschritte durchführt.

Erfindungsgemäß wirkt die Steuereinrichtung derart mit der Eingabeeinrichtung zusammen, dass die Kupplungssequenz von dem Benutzer mittels Nutzung der Eingabeeinrichtung auslösbar ist. Das heißt, dass der Benutzer, beispielsweise ein Maschinenführer, die Eingabeeinrichtung betätigt und der Kupplungsprozess zumindest selbsttätig beziehungsweise automatisch nach Vorgabe der Kupplungssequenz erfolgt. Sollten mehrere Kupplungssequenzen auf dem Datenspeicher gespeichert sein, kann der Benutzer auf der Eingabeeinrichtung die gewünschte Kupplungssequenz auswählen.

Die selbsttätige Durchführung des Kupplungsprozesses ohne händisches Zutun oder zumindest mit weniger händischem Zutun als bei den aus dem Stand der Technik bekannten Kupplungsprozessen bringt viele Vorteile mit sich. Zum einen kann der Kupplungsprozess gegenüber dem händischen Kupplungsprozess beschleunigt werden. Des Weiteren können Fehler vermieden werden, die gegebenenfalls zu einer unzureichenden Kupplung zwischen der Arbeitsmaschine und dem Anbaugerät führen. Bestenfalls muss ein Benutzer der Arbeitsmaschine die Fahrzeugkabine für die Kupplungsprozess nicht verlassen, sondern durch eine Eingabe auf der Eingabeeinrichtung kann der Kupplungsprozess gestartet werden. Der Kupplungsprozess kann sodann selbststätig, schnell und fehlerfrei durchgeführt werden.

Gemäß einer vorzugsweisen Ausgestaltung der Erfindung ist vorgesehen, dass die Kupplungssequenz einem Eingabeelement der Eingabeeinrichtung, das vorzugsweise als dedizierte Funktionstaste ausgebildet ist, logisch zugeordnet ist, sodass der Benutzer die Kupplungssequenz durch Betätigung des Eingabeelements auslösen kann. Hierbei wäre es denkbar, dass dem Benutzer lediglich ein Eingabeelement zur Verfügung steht, das den Kupplungsprozess startet. Je nachdem welche Stellung gerade vorliegt, wird der entsprechende Kupplungsprozess begonnen. Befindet sich die Hubkupplung beispielsweise in ihrer Ausgangsstellung, würde diese infolge der Betätigung des Eingabeelements automatisch in ihre Kupplungsstellung überführt werden können. Befindet sich die Hubkupplung wiederum in ihrer Kupplungsstellung, wäre es denkbar, dass sie bei Betätigung des Eingabeelements in ihre Ausgangsstellung zurück überführt wird. Selbstverständlich ist es denkbar, dass beide Kupplungssequenzen (Absenken und Anheben) von jeweils einem Eingabeelement ausgelöst werden können.

Des Weiteren ist es denkbar, dass weitere Kupplungssequenzen, die nur Teilschritte des Kupplungsprozesses enthalten, von dem Benutzer eingestellt werden können..

Dass das Eingabeelement als dezidierte Funktionstaste ausgeführt sein kann, vereinfacht die Bedienung für den Benutzer.

Es ist gemäß einer vorzugsweisen Ausgestaltung der Erfindung vorgesehen, dass die Hubkupplung eine Anbaukonsole, eine mit der Anbaukonsole schwenkbar verbundene Schwenkkonsole, eine mit der Anbaukonsole verbundene Niederhaltervorrichtung, ein an der Schwenkkonsole verschiebbar gelagertes Schlittenelement und ein an dem Schlittenelement gelagertes Kupplungselement umfasst, wobei das Kupplungselement zur Zusammenwirkung mit dem Kopplungsmittel des Anbaugeräts eingerichtet ist, wobei vorzugsweise das Kupplungselement von einem Kupplungsdorn oder einer Kupplungskugel gebildet ist.

Die Schwenkkonsole ist drehbar an der Anbaukonsole gelagert, sodass diese um eine vorzugsweise horizontal ausgerichtete, vorzugsweise parallel zu einer Querachse der Arbeitsmaschine orientierte Schwenkachse geschwenkt werden kann. Dadurch sind zumindest ein distales Ende der Schwenkkonsole sowie das an der Schwenkkonsole befindliche Schlittenelement in Richtung eines Untergrunds absenkbar. Das Schlittenelement ist verschiebbar in der Schwenkkonsole gelagert, sodass das Schlittenelement vorzugsweise entlang einer Längsachse der Schwenkkonsole in Richtung des Kopplungsmittels an dem Anbaugerät verschoben, insbesondere ausgefahren, werden kann. Das Kupplungselement befindet sich vorzugsweise an einem distalen Ende des Schlittenelements. Das Kupplungselement kann stoffschlüssig oder formschlüssig mit dem Schlittenelement verbunden sein. Das Kupplungselement ist beispielsweise als Kupplungsdorn oder Kupplungskugel ausgebildet. Mit Hilfe der Niederhaltervorrichtung kann verhindert werden, dass sich das mit dem Kupplungselement verbundene Kopplungsmittel des Anbaugerätes von dem Kupplungselement löst, wenn die Hubkupplung in ihrer Ausgangsstellung vorliegt.

Eine vorteilhafte Ausgestaltung der Erfindung sieht vor, dass die Kupplungssequenz zumindest die Arbeitsschritte "Verschwenkung der Schwenkkonsole relativ zu der Anbaukonsole", wodurch ein distales Ende der Schwenkkonsole in Richtung eines Untergrunds abgesenkt wird, und "Ausfahren des Schlittenelements" umfasst. Es hat sich herausgestellt, dass insbesondere diese beiden Arbeitsschritte sehr zeitaufwendig und schwierig durchzuführen sind, weshalb es besonders vorteilhaft ist, wenn die Kupplungssequenz diese Arbeitsschritte enthält. Bei einer Betätigung der Eingabeelements durch den Benutzer, ruft die Steuereinrichtung die Kupplungssequenz aus dem Datenspeicher ab und steuert die Hubkupplung entsprechend an.

Eine besonders vorteilhafte Weiterentwicklung der erfindungsgemäßen Arbeitsmaschine sieht vor, dass die Schwenkkonsole bei Vorliegen der Hubkupplung in ihrer Ausgangsstellung gegen unbeabsichtigte Verschwenkung relativ zu der Anbaukonsole mittels eines Sicherungsmittels gesichert ist, wobei das Sicherungsmittel zur Durchführung eines jeweiligen Kupplungsprozesses hydraulisch oder elektrisch lösbar und hierdurch die Verschwenkung der Schwenkkonsole relativ zu der Anbaukonsole freigebbar sind. Das Sicherungsmittel bringt den Vorteil mit sich, dass die Schwenkkonsole sich nicht ungewollt ausgehend von ihrer Ausgangsstellung bewegt. Mögliche Beschädigungen an der Schwenkkonsole und oder dem Schlittenelement können somit vermieden werden.

Ein Sicherungsmittel ist insbesondere auch dann von Vorteil, wenn, wie bereits aus dem Stand der Technik bekannt, das Anbaugerät mit einer Dreipunktaufhängung an dem Arbeitsgerät fixiert wird. Bevor eine Kupplung des Anbaugeräts mit der Dreipunktaufhängung erfolgt, wird diese, typischerweise mit einer Hydraulik, abgesenkt. Vorteilhafterweise kann diese Hydraulik ebenfalls dazu verwendet werden, die Hubkupplung von ihrer Ausgangsstellung in ihre Kupplungsstellung und/oder in umgekehrte Richtung zu überführen. Da die Dreipunktaufhängung in der Regel unabhängig von der Schwenkkonsole der Hubkupplung absenkbar sein soll, kann die Schwenkkonsole mittels des Sicherungsmittels fixiert und somit an einer Mitbewegung mit der Dreipunktaufhängung gehindert werden.

Es hat sich herausgestellt, dass es bei Vorliegen des Sicherungsmittels von Vorteil ist, wenn die Kupplungssequenz den Arbeitsschritt "Lösen des Sicherungsmittels" umfasst, der sich zeitlich vor dem Arbeitsschritt "Verschwenkung der Schwenkkonsole relativ zu der Anbaukonsole" befindet. Dies bringt den Vorteil mit sich, dass auch das Sicherungsmittel mittels der Steuereinrichtung automatisch durch eine Eingabe an der Eingabeeinrichtung und ohne eine sonstige händische Betätigung außerhalb der Fahrzeugkabine gelöst oder festgestellt werden kann.

Eine weitere Ausgestaltung der Erfindung sieht mindestens eine Sensoreinrichtung vor, die dazu geeignet ist, einen Bewegungsraum der Hubkupplung, innerhalb dessen ein oder mehrere Elemente der Hubkupplung sich im Zuge der Durchführung des Kupplungsprozesses bewegen, vorzugsweise optisch, zu überwachen. Die Sensoreinrichtung ist in Daten übertragender Weise mit der Steuereinrichtung verbunden, sodass für den Fall, dass mittels der Sensoreinrichtung Informationen erfasst werden, aus denen sich ein innerhalb des Bewegungsraums befindliches Hindernis ergibt, die Steuereinrichtung in Abhängigkeit dieser Informationen den Kupplungsprozess selbsttätig unterbrechen kann. Hieraus ergibt sich insbesondere der Vorteil, dass mittels der Sensoreinrichtung verhindert werden kann, dass Beschädigungen an der Hubkupplung entstehen, wenn sich Hindernisse innerhalb des Bewegungsraumes der Hubkupplung befinden. Die Hindernisse werden von der Sensoreinrichtung erfasst, an die Steuereinrichtung weitergegeben, welche diese Informationen verarbeitet und den Kupplungsprozess entsprechend stoppt. Der Benutzer kann sodann ggf. das Hindernis entfernen, bevor der selbsttätige Kupplungsprozess weitergeführt wird. Der Bewegungsraum der Hubkupplung beschreibt einen Raum, innerhalb dessen sich die Elemente der Hubkupplung während eines Kupplungsprozesses bewegen.

Ferner betrifft die Erfindung ein Verfahren zum Betrieb einer landwirtschaftlichen Arbeitsmaschine, insbesondere eines landwirtschaftlichen Traktors, wobei die landwirtschaftliche Arbeitsmaschine gemäß einem der vorhergehenden Ansprüche ausgebildet ist, dadurch gekennzeichnet, dass infolge einer Nutzung der Eingabeeinrichtung durch den Benutzer der Arbeitsmaschine die Kupplungssequenz ausgelöst wird, woraufhin die Steuereinrichtung die Hubkupplung derart ansteuert, dass zumindest die Arbeitsschritte der Kupplungssequenz selbsttätig ausgeführt werden, derer es zur Überführung der Hubkupplung von ihrer Ausgangsstellung in ihre Kupplungsstellung bedarf.

Das erfindungsgemäße Verfahren ist mittels der erfindungsgemäßen landwirtschaftlichen Arbeitsmaschine besonders gut durchführbar. Dies gilt ebenso für die vorteilhaften Ausgestaltungen der erfindungsgemäßen Erntemaschine.

Die sich durch das Verfahren erzielten Vorteile ergeben sich analog zu der landwirtschaftlichen Arbeitsmaschine. Die als vorteilhaft beschriebenen Ausgestaltungen der Arbeitsmaschine sind analog für das erfindungsgemäße Verfahren ebenso vorteilhaft und stellen somit analoge vorteilhafte Weiterbildung des erfindungsgemäßen Verfahrens dar.

Eine besonders vorteilhafte Weiterentwicklung des Verfahrens sieht vor, dass die Eingabeeinrichtung eine dediziertes Eingabeelement, das vorzugsweise als Funktionstaste ausgebildet ist, aufweist, die der Kupplungssequenz zugeordnet ist, wobei die Kupplungssequenz ausgelöst wird, sobald der Benutzer die Funktionstaste betätigt. Dies bringt eine möglichst fehlerfreie und bequeme Benutzung durch den Benutzer mit sich. Vorteilhafterweise kann der Benutzer während des gesamten Kupplungsprozesses in der Fahrerkabine verbleiben.

Die Erfindung ist nachstehend anhand eines Ausführungsbeispiels, das in den Figuren dargestellt ist, näher erläutert. Es zeigt:
- Fig. 1:: Einen Querschnitt durch eine erfindungsgemäße landwirtschaftliche Arbeitsmaschine,
- Fig. 2:: Eine Hubkupplung der landwirtschaftlichen Arbeitsmaschine gemäß Figur 1,
- Fig. 3:: Die Hubkupplung gemäß Figur 2 in ihrer Ausgangsstellung,
- Fig. 4:: Die Hubkupplung gemäß Figur 2 in ihrer angehobenen Stellung,
- Fig. 5:: Die Hubkupplung gemäß Figur 2 in ihrer abgesenkten Stellung,
- Fig. 6:: Die Hubkupplung gemäß Figur 2 in ihrer Ausfahrstellung.

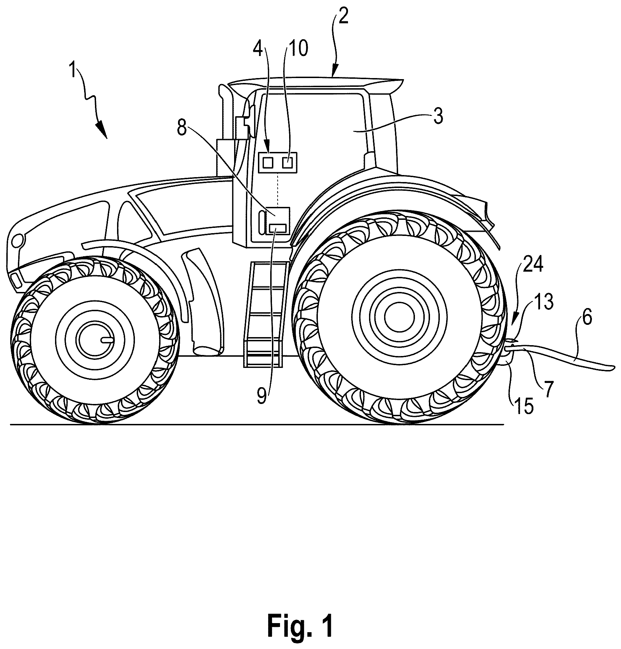

Ein Ausführungsbeispiel, das in den **Figuren 1 bis 6** dargestellt ist, umfasst eine landwirtschaftliche Arbeitsmaschine **1,** die hier von einem landwirtschaftlichen Traktor gebildet ist. Diese umfasst eine Fahrzeugkabine **2** die einen Kabineninnenraum **3** umgibt. In dem Kabineninnenraum ist eine Eingabeeinrichtung **4** mit einem Eingabeelement **10** angeordnet, mittels dessen ein Benutzer der Arbeitsmaschine **1** Eingaben zum Betrieb der Arbeitsmaschine **1** tätigen kann. In der Fahrzeugkabine **2** ist weiterhin eine Steuereinrichtung **8,** die einen Datenspeicher **9** umfasst, angeordnet. Die Steuereinrichtung **8** ist dazu vorgesehen und eingerichtet, einen Kupplungsprozess, bei dem eine Hubkupplung **5** von einer Ausgangsstellung in eine Kupplungsstellung und umgekehrt überführt wird, zumindest teilweise selbsttätig beziehungsweise automatisch durchzuführen. Ein Benutzer muss hierzu lediglich das Eingabeelement **10** der Eingabeeinrichtung **4** betätigen.

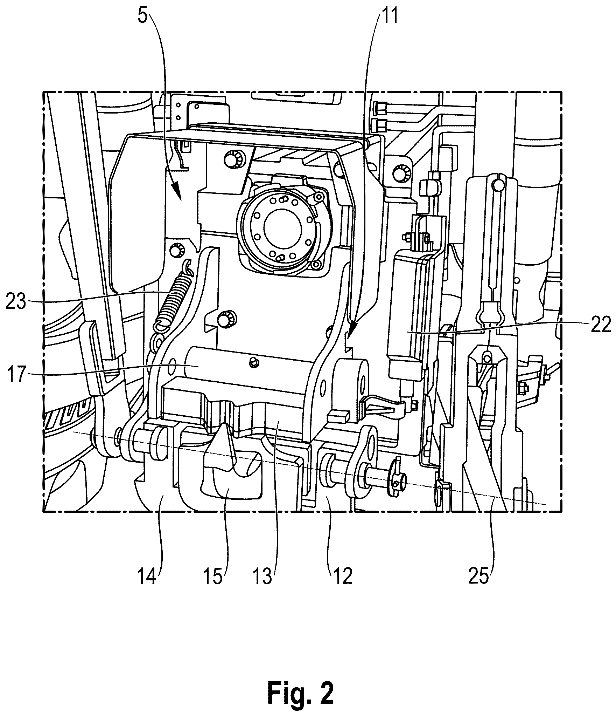

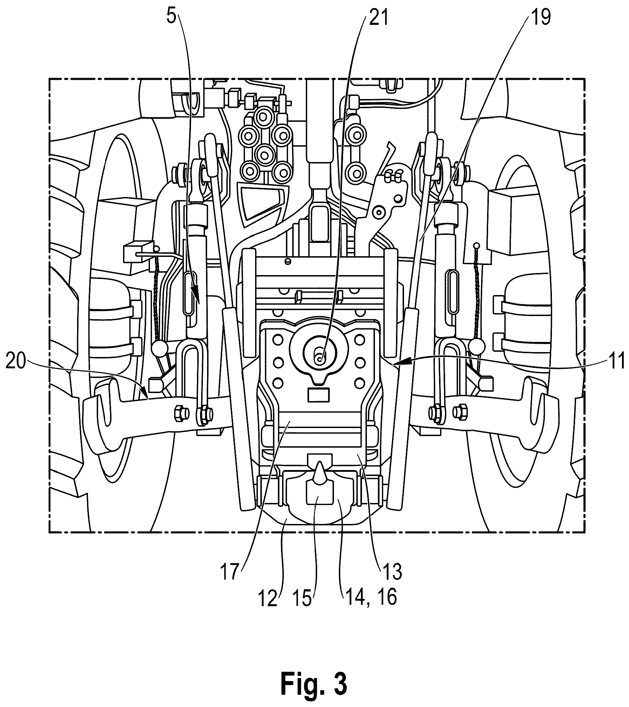

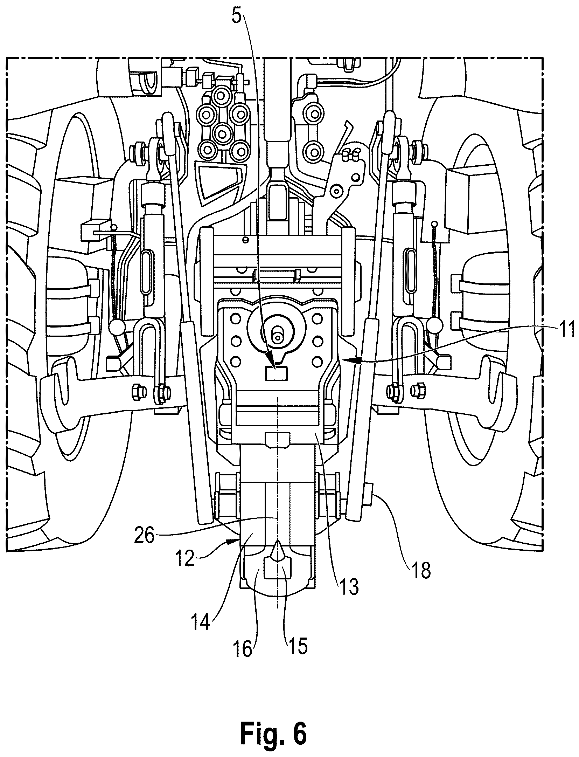

An einem Heck **24** der Arbeitsmaschine 1 befindet sich die Hubkupplung **5** zur Ankupplung eines Anbaugeräts **6.** Im Rahmen des Kupplungsprozesses, im Zuge dessen das Anbaugerät **6** an die Arbeitsmaschine **1** ankuppelbar oder von der Arbeitsmaschine **1** abkuppelbar ist, kann die Hubkupplung **5** ausgehend von ihrer Ausgangsstellung (**Figur 2** **und** **3****)** in ihre Kupplungsstellung (**Figur 6****)** und wieder zurück überführt werden. In ihrer Kupplungsstellung ist die Hubkupplung **5** dazu geeignet, ein Kopplungsmittel **7** des Anbaugerätes **6** zum Zweck der Ankupplung des Anbaugerätes **6** an die Arbeitsmaschine **1** aufzunehmen oder zum Zweck der Abkupplung des Anbaugerätes **6** von der Arbeitsmaschine **1** freizugeben.

Die Hubkupplung **5** umfasst ein Kupplungselement **15,** welches mit dem Kopplungsmittel **7** des Anbaugerätes **6** verbindbar und hierdurch das Anbaugerät **6** an die Arbeitsmaschine **1** ankuppelbar ist. Das hier nicht weiter dargestellte Anbaugerät **6** ist beispielsweise von einem Anhänger gebildet.

In den **Figuren 2** **und** **3** wird die Hubkupplung **5** der landwirtschaftlichen Arbeitsmaschine **1** in ihrer Ausgangsstellung, in der sie nicht mit dem Kopplungsmittel **7** des Anbaugerätes **6** gekoppelt ist, näher dargestellt. Die Hubkupplung **5** ist hier und vorzugsweise unterhalb einer Zapfwelle **21** der Arbeitsmaschine **1** angeordnet. Die Hubkupplung **5** umfasst hier und vorzugsweise eine Anbaukonsole **11** , die fest mit der Arbeitsmaschine **1** verbunden ist. An der Anbaukonsole **11** ist eine Schwenkkonsole **12** schwenkbar gelagert. Eine Schwenkung des Schwenkkonsole **12** erfolgt entlang einer horizontal ausgerichteten, parallel zu einer Querachse der Arbeitsmaschine **1** orientierten Schwenkachse **25.** Um ungewollte Verschwenkungen der Schwenkkonsole **12** bei Vorliegen der Hubkupplung **5** in der Ausgangsstellung zu verhindern, ist ein Sicherungsmittel **17** vorgesehen, mittels dessen die Schwenkkonsole **12** an der Anbaukonsole **11** arretiert ist. Das Sicherungsmittel **17** lässt sich mittels eines elektrischen Aktors **22,** der entgegen einer Federkraft einer Spiralfeder **23** verdreht wird, entriegeln, sodass die Schwenkkonsole **12** auf Wunsch relativ zu der Anbaukonsole **11** verschwenkbar ist. Mit Hilfe der Spiralfeder **23** wird das Sicherungsmittel 17 wieder in seine Verschlussstellung überführt.

An der Schwenkkonsole **12** ist ein Schlittenelement **14** verschiebbar gelagert, wobei das Schlittenelement **14** vorzugsweise entlang einer Längsachse **26** der Schwenkkonsole **12** verschiebbar gelagert ist. An einem distalen Ende **16** des Schlittenelements **14** befindet sich das Kupplungselement **15,** welches mit dem Kopplungsmittel **7** des Anbaugeräts **6** verbunden ist. Das Kopplungsmittel **7** wird in diesem Ausführungsbeispiel von einem Kupplungsdorn gebildet. Das Kopplungsmittel **7** des Anbaugerätes **6** wird mit einer Niederhaltevorrichtung **13** der Hubkupplung **5** gesichert, wenn sich die Hubkupplung **5** in ihrer Ausgangsstellung befindet.

An dem Heck **24** der Arbeitsmaschine **1** befindet sich weiterhin eine Dreipunktaufhängung **20** mit der die Hubkupplung **5** zusammenwirkt. Die Dreipunktaufhängung **20** umfasst ein Hubgestänge **19,** mittels dessen die Dreipunktaufhängung **20** abgesenkt oder angehoben werden kann. Die Hubkupplung **5** ist derart mit der Dreipunktaufhängung **20** verbunden, dass das Hubgestänge **19** ebenfalls eine Absenkung oder Anhebung der Schwenkkonsole **12** bewirken kann, wenn das Sicherungsmittel **17** entriegelt und somit die Schwenkkonsole **12** zur Verschwenkung freigegeben ist. Das Hubgestänge **19** wird hydraulisch über ein nicht gesondert dargestelltes Hydrauliksystem angetrieben.

Die **Figuren 3 bis 6** zeigen die Hubkupplung **5** der Arbeitsmaschine **1** bei verschiedenen Arbeitsschritten des Kupplungsprozesses ausgehend von der Ausgangsstellung bis zur Kupplungsstellung, wobei diese Arbeitsschritte gemeinsam eine Kupplungssequenz bilden. Diese Kupplungssequenz ist in dem Datenspeicher **9** der Steuereinrichtung **8** gespeichert. Denkbar wäre, dass auch weitere Kupplungssequenzen in dem Datenspeicher **9** gespeichert sind, wie beispielsweise eine Überführung der Hubkupplung **5** von ihrer Kupplungsstellung in ihre Ausgangsstellung.

Nach einer Betätigung des Eingabeelements **10,** das hier beispielsweise als dedizierte Funktionstaste ausgeführt ist, der Eingabeeinrichtung **4** durch einen Benutzer ruft die Steuereinrichtung **8** aus ihrem Datenspeicher **9** die Kupplungssequenz ab. Das heißt, die Steuereinrichtung **8** wirkt derart mit der Eingabeeinrichtung **4** zusammen, dass die Kupplungssequenz von dem Benutzer mittels Nutzung der Eingabeeinrichtung **4** auslösbar ist.

In der **Figur 3** ist die Hubkupplung **5** in ihrer Ausgangsstellung dargestellt, in der sie nicht mit einem Kopplungsmittel **7** des Anbaugerätes **6** zusammenwirkt. Die Schwenkkonsole **12** ist nicht abgesenkt und ist mit dem Sicherungsmittel **17** gesichert. Das Schlittenelement **14** befindet sich in einem in der Schwenkkonsole **12** eingefahrenem Zustand. Die Dreipunktaufhängung **19** befindet sich in einer mittleren Stellung. Die Dreipunktaufhängung **19** ist unabhängig von der Hubkupplung **5** heb- und senkbar.

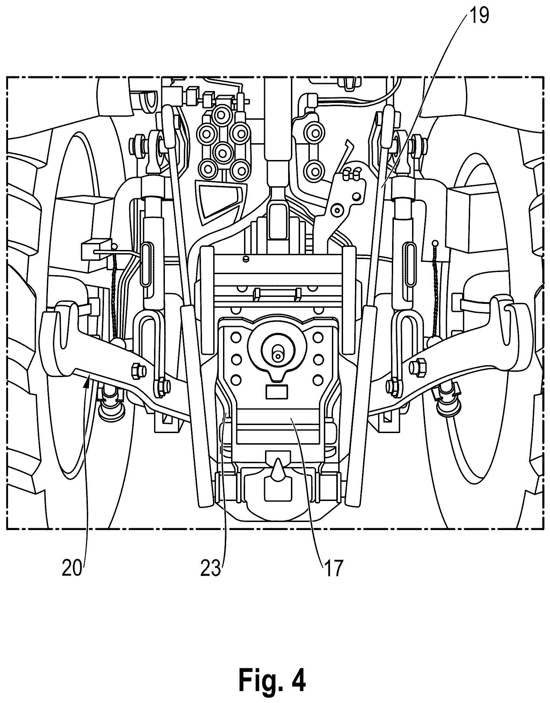

Nach Betätigung des Eingabeelements **10** wird in einem ersten Arbeitsschritt des Kupplungsprozesses, dem Arbeitsschritt "Anheben der Dreipunktaufhängung **19",** zunächst die Dreipunktaufhängung **19** angehoben, wie in **Figur 4** ersichtlich ist.

Sobald die Dreipunktaufhängung **19** in einer maximal angehobenen Stellung angelangt ist, wird in einem weiteren Arbeitsschritt, nämlich dem Arbeitsschritt "Lösen des Sicherungsmittels **17",** das Sicherungsmittel **17** mittels des Aktors **22** gelöst, das heißt in seine Freigabestellung überführt, sodass die Schwenkkonsole **12** freigegeben mit Hilfe des Hubgestänges **19** der Dreipunktaufhängung **20** nach unten verschwenkbar ist.

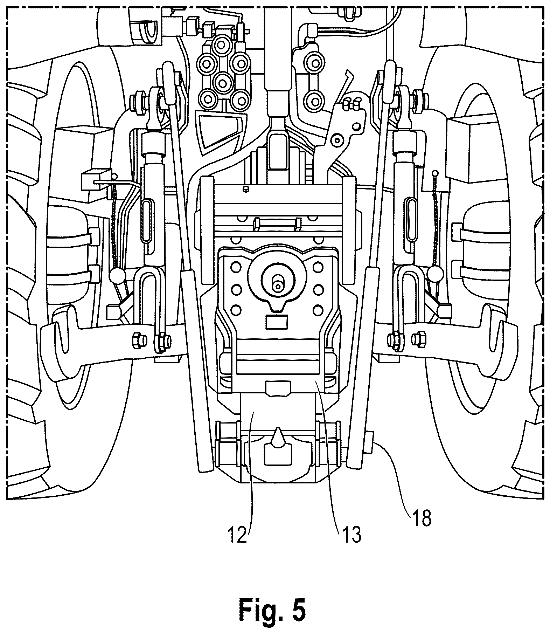

Die **Figur 5** zeigt, dass in einem weiteren Arbeitsschritt, nämlich dem Arbeitsschritt "Verschwenkung der Schwenkkonsole **12** relativ zu der Anbaukonsole **11",** anschließend die Schwenkkonsole **12** in Richtung eines Untergrundes abgesenkt wird.

Im letzten, in **Figur 6** dargestellten Arbeitsschritt, nämlich dem Arbeitsschritt "Ausfahren des Schlittenelements **14"** wird das Schlittenelement **14** entlang der Längsachse **26** aus der Schwenkkonsole **12** ausgefahren, woraufhin die Hubkupplung **5** sich in ihrer Kupplungsstellung befindet, in der sie dazu geeignet ist, das Kopplungsmittel **7** des Anbaugerätes **6** zum Zwecke der Ankupplung des Anbaugerätes **6** an die Arbeitsmaschine **1** aufzunehmen.

Die Kupplungssequenz enthält in diesem Ausführungsbeispiel demzufolge folgende Arbeitsschritte: (i) Anheben der Dreipunktaufhängung **19;** (ii) Lösen des Sicherungsmittels **17** (**Figur 4****),** (iii) Verschwenkung der Schwenkkonsole **12 (****Figur 5****),** (iv) Ausfahren des Schlittenelements **14** (**Figur 6****).** Diese Kupplungssequenz wird hier und vorzugsweise vollständig selbsttätig von der Steuereinrichtung **8** durchgeführt, nachdem der Benutzer das Eingabeelement **10** betätigt hat. Nach dem Ankuppeln des Kopplungsmittels **7** des Anbaugeräts **6** ist der Kupplungsprozess noch nicht beendet. Allerdings werden in dem gezeigten Beispiel die verbleibenden Arbeitsschritte bis zur Beendigung des Kupplungsprozesses nicht mehr automatisch von Steuereinrichtung **8** vorgenommen, sondern einzeln von dem Benutzer ausgelöst. Somit löst der Benutzer hier und vorzugsweise das Hydrauliksystem der Dreipunktaufhängung **19,** um mit der Dreipunktaufhängung **19** gemeinsam auch die Schwenkkonsole **12** wieder nach oben zu verschwenken. Hierbei wird das Kopplungsmittel **7** des Anbaugeräts **6** mit angehoben. Gleichzeitig zu der Verschwenkung der Schwenkkonsole **12** nach oben oder im Anschluss daran wird das Schlittenelement **14** wieder eingefahren. Schließlich liegt die Hubkupplung **5** wieder in ihrer Ausgangsstellung vor, bei deren Erreichen die Schwenkkonsole **12** mittels des Sicherungsmittels **17** wieder gesichert wird. Bei Vorliegen in der Ausgangsstellung verhindert die Niederhaltevorrichtung **13,** dass das Kopplungsmittel **7** sich in unbeabsichtigter Weise von dem Kopplungselement **15** abhebt bzw. löst. Damit ist der Kupplungsprozess beendet und das Anbaugerät **6** sicher mit der Arbeitsmaschine **1** gekoppelt. Der Benutzer musste für das Ankoppeln des Anbaugeräts **6** die Fahrzeugkabine **2** nicht verlassen.

In den **Figuren 5** **und** **6** wird ferner eine Sensoreinrichtung **18** mit einem optischen Sensor dargestellt. Mit Hilfe dieser Sensoreinrichtung **18** kann überwacht werden, ob sich innerhalb eines Bewegungsraumes der Hubkupplung **5,** innerhalb dessen die einzelnen Elemente der Hubkupplung **5** (Schwenkkonsole **12,** Schlittenelement **14,** Kopplungselement **15)** sich im Zuge der Durchführung des Kupplungsprozesses bewegen. Die Sensoreinrichtung **18** ist in Daten übertragender Weise mit der Steuereinrichtung **8** verbunden. Für den Fall, dass mittels der Sensoreinrichtung **18** Informationen erfasst werden, aus denen sich ein innerhalb des Bewegungsraums befindliches Hindernis ergibt, kann die Steuereinrichtung **18** in Abhängigkeit dieser Information den Kupplungsprozess selbsttätig unterbrechen.

### Bezugszeichenliste

- 1: Arbeitsmaschine
- 2: Fahrzeugkabine
- 3: Kabineninnenraum
- 4: Eingabeeinrichtung
- 5: Hubkupplung
- 6: Anbaugerät
- 7: Kopplungsmittel des Anbaugeräts
- 8: Steuereinrichtung
- 9: Datenspeicher
- 10: Eingabeelement
- 11: Anbaukonsole
- 12: Schwenkkonsole
- 13: Niederhaltevorrichtung
- 14: Schlittenelement
- 15: Kupplungselement
- 16: distales Ende des Schlittenelements
- 17: Sicherungsmittel
- 18: Sensoreinrichtung
- 19: Hubgestänge
- 20: Dreipunktaufhängung
- 21: Zapfwelle
- 22: Aktor
- 23: Spiralfeder
- 24: Heck
- 25: Schwenkachse
- 26: Längsachse

## Patentansprüche

1. Landwirtschaftliche Arbeitsmaschine (1), insbesondere landwirtschaftlicher Traktor, umfassend
- eine Fahrzeugkabine (2),
- eine in einem Kabineninnenraum (3) der Fahrzeugkabine (2) angeordnete Eingabeeinrichtung (4), mittels der ein Benutzer der Arbeitsmaschine (1) Eingaben zum Betrieb der Arbeitsmaschine (1) tätigen kann,
- eine Hubkupplung (5) zur Ankupplung eines Anbaugeräts (6),
wobei die Hubkupplung (5) bei der Durchführung eines Kupplungsprozesses, im Zuge dessen das Anbaugerät (6) an die Arbeitsmaschine (1) ankuppelbar oder von der Arbeitsmaschine (1) abkuppelbar ist, ausgehend von ihrer Ausgangsstellung, in der sie sich sowohl vor Beginn des Kupplungsprozesses als auch nach Beendigung des Kupplungsprozesses befindet, in eine Kupplungsstellung überführbar ist, bei deren Vorliegen sie dazu geeignet ist, ein Kopplungsmittel (7) des Anbaugeräts (6) zum Zweck der Ankupplung des Anbaugeräts (6) an die Arbeitsmaschine (1) aufzunehmen oder zum Zweck der Abkupplung des Anbaugeräts (6) von der Arbeitsmaschine (1) freizugeben,
**gekennzeichnet durch**
eine Steuereinrichtung (8), die einen Datenspeicher (9) umfasst und dazu vorgesehen und eingerichtet ist, eine Überführung der Hubkupplung (5) von der Ausgangsstellung in die Kupplungsstellung selbsttätig durchzuführen,
wobei zumindest solche Arbeitsschritte, derer es zur Überführung der Hubkupplung (5) von der Ausgangsstellung in die Kupplungsstellung bedarf, einer Kupplungssequenz zugeordnet sind, die in dem Datenspeicher (9) gespeichert ist,
wobei die Steuereinrichtung (8) derart mit der Eingabeeinrichtung (4) zusammenwirkt, dass die Kupplungssequenz von dem Benutzer mittels Nutzung der Eingabeeinrichtung (4) auslösbar ist.

2. Landwirtschaftliche Arbeitsmaschine (1) nach Anspruch 1, **dadurch gekennzeichnet, dass** die Kupplungssequenz logisch einem Eingabeelement (10) der Eingabeeinrichtung (4), das vorzugsweise als dedizierte Funktionstaste ausgebildet ist, zugeordnet ist, sodass der Benutzer die Kupplungssequenz durch Betätigung des Eingabeelements (10) auslösen kann.

3. Landwirtschaftliche Arbeitsmaschine (1) nach einem der vorhergehenden Ansprüche, **dadurch gekennzeichnet, dass** die Hubkupplung (5) eine Anbaukonsole (11), eine mit der Anbaukonsole (11) schwenkbar verbundene Schwenkkonsole (12), eine mit der Anbaukonsole (11) verbundene Niederhaltervorrichtung (13), ein an der Schwenkkonsole (12) verschiebbar gelagertes Schlittenelement (14) und ein an dem Schlittenelement (14) gelagertes Kupplungselement (15) umfasst, wobei das Kupplungselement (15) zur Zusammenwirkung mit dem Kopplungsmittel (7) des Anbaugeräts (6) eingerichtet ist, wobei vorzugsweise das Kupplungselement (15) von einem Kupplungsdorn oder einer Kupplungskugel gebildet ist.

4. Landwirtschaftliche Arbeitsmaschine (1) nach Anspruch 3, **dadurch gekennzeichnet, dass** die Kupplungssequenz zumindest die Arbeitsschritte
- Verschwenkung der Schwenkkonsole (12) relativ zu der Anbaukonsole (11), wodurch ein distales Ende (16) der Schwenkkonsole (12) in Richtung eines Untergrunds abgesenkt wird, und
- Ausfahren des Schlittenelements (14)
umfasst.

5. Landwirtschaftliche Arbeitsmaschine (1) nach Anspruch 3 oder 4, **dadurch gekennzeichnet**, die Schwenkkonsole (12) bei Vorliegen der Hubkupplung (5) in ihrer Ausgangsstellung gegen unbeabsichtigte Verschwenkung relativ zu der Anbaukonsole (11) mittels eines Sicherungsmittels (17) gesichert ist, wobei das Sicherungsmittel (17) zur Durchführung eines jeweiligen Kupplungsprozesses hydraulisch oder elektrisch lösbar und hierdurch die Verschwenkung der Schwenkkonsole (12) relativ zu der Anbaukonsole (11) freigebbar sind.

6. Landwirtschaftliche Arbeitsmaschine (1) nach den Ansprüchen 4 und 5, **dadurch gekennzeichnet, dass** die Kupplungssequenz ferner den Arbeitsschritt
- Lösen des Sicherungsmittels (17)
umfasst, der sich zeitlich vor dem Arbeitsschritt der Verschwenkung der Schwenkkonsole (12) befindet.

7. Landwirtschaftliche Arbeitsmaschine (1) nach einem der vorhergehenden Ansprüche, **gekennzeichnet durch** mindestens eine Sensoreinrichtung (18), die dazu geeignet ist, einen Bewegungsraum der Hubkupplung (5), innerhalb dessen ein oder mehrere Elemente (11, 12, 13, 14, 15) der Hubkupplung (5) sich im Zuge der Durchführung des Kupplungsprozesses bewegen, vorzugsweise optisch, zu überwachen, wobei die Sensoreinrichtung (18) in Daten übertragender Weise mit der Steuereinrichtung (8) verbunden ist, sodass für den Fall, dass mittels der Sensoreinrichtung (18) Informationen erfasst werden, aus denen sich ein innerhalb des Bewegungsraums befindliches Hindernis ergibt, die Steuereinrichtung (8) in Abhängigkeit dieser Informationen den Kupplungsprozess selbsttätig unterbrechen kann.

8. Verfahren zum Betrieb einer landwirtschaftlichen Arbeitsmaschine (1), insbesondere eines landwirtschaftlichen Traktors, wobei die landwirtschaftliche Arbeitsmaschine (1) gemäß einem der vorhergehenden Ansprüche ausgebildet ist,
**dadurch gekennzeichnet, dass**
infolge einer Nutzung der Eingabeeinrichtung (4) durch den Benutzer der Arbeitsmaschine (1) die Kupplungssequenz ausgelöst wird, woraufhin die Steuereinrichtung (8) die Hubkupplung (5) derart ansteuert, dass zumindest die Arbeitsschritte der Kupplungssequenz selbsttätig ausgeführt werden, derer es zur Überführung der Hubkupplung (5) von ihrer Ausgangsstellung in ihre Kupplungsstellung bedarf.

9. Verfahren nach Anspruch 8, **dadurch gekennzeichnet, dass** die Eingabeeinrichtung (4) eine dediziertes Eingabeelement (10), das vorzugsweise als Funktionstaste ausgebildet ist, aufweist, die dem Kupplungsprozess zugeordnet ist, wobei die Kupplungssequenz ausgelöst wird, sobald der Benutzer die Funktionstaste betätigt.
